# EUROPÄISCHE PATENTSCHRIFT

(11) **EP 2 812 611 B1**
(45) Veröffentlichungstag und Bekanntmachung des Hinweises auf die Patenterteilung: **20.04.2016**
(21) Anmeldenummer: 13706188.3
(22) Anmeldetag: 07.02.2013
(51) Int. Cl.: F16H 55/46, F16H 55/50

(54) **SPEICHENKONSTRUKTION FÜR SEILSCHEIBEN**
SPOKE CONSTRUCTION FOR CABLE PULLEYS
STRUCTURE À RAYONS POUR POULIES À CÂBLE

(30) Priorität: 10.02.2012 DE 102012002743
(43) Veröffentlichungstag der Anmeldung: 17.12.2014
(73) Patentinhaber: Siemag Tecberg GmbH, 35708 Haiger (DE)
(72) Erfinder: SCHUBERT, Wolfgang, 35708 Haiger (DE); SUNDERHAUS, Hubert, 35708 Haiger (DE)
(74) Vertreter: Sonnenberg, Fred
(86) Internationale Anmeldenummer: PCT/EP2013/052427
(87) Internationale Veröffentlichungsnummer: WO 2013/117639

(56) Entgegenhaltungen:
- DE-C- 623 390
- FR-A- 472 143
- FR-A- 701 333
- GB-A- 191 201 466
- US-A- 1 682 559

## Beschreibung

Die vorliegende Erfindung bezieht sich auf Seilscheiben zur Verwendung als Führungseinrichtung zwischen einem Fördermittel und einem Seilträger, wie durch den unabhängigen Patentanspruch beschrieben. Dokument DE 623390 C1 wird als der nächste Stand der Technik angesehen und offenbart die Präambel des Anspruchs 1.

Bei einer Seilscheibe handelt es sich im Wesentlichen um ein Speichenrad, dessen Umlauf eine oder mehrere Rillen aufweist. Die Rillen dienen der Seilführung. Seilscheiben werden in der Regel aus Spezialstählen gefertigt und sind deshalb äußerst robust und verschleißarm.

In der Regel besitzen Seilscheiben wartungsfreie Lager. Beim Lauf des Förderseiles über die Seilscheibe tritt, bedingt durch die innere Seilreibung und die Lagerreibung, ein Energieverlust auf. Eine Seilscheibe funktioniert im Prinzip wie eine feste Rolle. Der Seilscheibennenndurchmesser muss je nach Verwendung das 40- bis 120-fache des Seilnenndurchmessers betragen. Der Seilscheibennenndurchmesser ist der, auf den Rillengrund bezogene, rechnerisch bestimmte Durchmesser der Seilscheibe. Bei Anlagen mit Fördergeschwindigkeiten über 4 m/s ist es in der Regel erforderlich, die Seilscheiben mit einem Seilscheibenfutter zu versehen. Wird das Förderseil durch eine Seilscheibe um circa 90° umgelenkt, bezeichnet man diese Scheibe als Umlenkscheibe, bei geringeren Winkeln als Umlenkscheibe.

Insbesondere im Bergbau haben Seilscheiben verschiedene Aufgaben. So dienen sie der Übertragung der Seillasten auf das Fördergerüst, sie erhöhen den Umschlingungswinkel um den Seilträger, sie helfen dabei, den Seilabstand an den Trummabstand anpassen oder dienen ganz schlicht der Seilumlenkung.

Insbesondere Seilscheiben, die im Bereich des Bergbaus eingesetzt werden, bestehen in der Regel aus einem Seilscheibenkranz, einer Nabe und diese verbindenden Seilscheibenspeichen, was zu Seilscheiben führt, die die notwendige Stabilität aufweisen, gleichzeitig aber aufgrund der Rad-/Speichenkonstruktion ein vertretbares Gewicht haben.

Die herkömmliche Konstruktion von Seilscheiben sieht dabei vor, dass die Seilscheibenspeichen aus herkömmlichen Walzprofilen bestehen, die mit der Nabe und der Seilscheibe verschweißt sind.

Walzprofile als Speichenmaterial haben dabei aber einerseits den Nachteil, dass das Material nicht durchgehend homogen ist, was ihre Schweißbarkeit und damit die Qualität der zu erreichenden stoffschlüssigen Verbindung negativ beeinflussen kann. Darüber hinaus sind Walzprofile als Speichen für Seilscheiben aber auch insofern nachteilig, da die Schweißpunkte aufgrund der Geometrie der Walzprofile schwer zu erreichen sind, und für die erforderliche Oberflächengüte schwer bearbeitbar sind, was die Kosten der Herstellung erhöht.

Um diese Probleme zu umgehen hat man versucht, anstelle der Walzprofile zwei am Rücken miteinander verbundene, U-förmige Bleche einzusetzen, die die Probleme der Erreichbarkeit der Anschlüsse, insbesondere bei der Ausführung der Schweißnaht als Vollanschluss, aber nicht lösen konnten.

Die Aufgabe der vorliegenden Erfindung ist es daher eine Seilscheibe vorzusehen, die die Nachteile des bekannten Standes der Technik umgeht, wobei insbesondere der Verbindbarkeit der Speichen mit Nabe und Seilscheibenkranz der Seilscheibe im Vordergrund steht.

Diese Aufgabe wird durch die Merkmale des unabhängigen Anspruches 1 gelöst, wobei zweckmäßige Ausführungsformen durch die Merkmale der Unteransprüche beschrieben sind.

Vorgesehen ist dabei eine Seilscheibe zur Verwendung als Führungseinrichtung zwischen einem Fördermittel und einem Seilträger, mit einem Seilscheibenkranz, einer Nabe und diese verbindenden Seilscheibenspeichen, wobei die Seilscheibenspeichen jeweils aus einem einzigen, über den Querschnitt der Seilscheibenspeiche mehrfach gebogenen Flachmaterial bestehen.

Der Einsatz eines über den Querschnitt gebogenen Flachmateriales löst die Probleme des bekannten Standes der Technik dabei auf überraschend einfache Art und Weise, da aufgrund der Verwendung eines einzigen Bauteiles aus Flachmaterial für die einzelne Seilscheibenspeiche die Komplexität der Montage oder Verbindung gegenüber der Verwendung mehrerer Walzprofile deutlich gesenkt werden kann, da nur ein Bauteil jeweils mit Nabe und Seilscheibenkranz verbunden werden muss. Ein über seine Querschnittserstreckung mehrfach gebogenes Flachmaterial mit einer homogenen Materialstärke bietet auch den Vorteil, dass die Schnittstelle von Speiche und Nabe oder Seilscheibenkranz deutlich einfacher zu erreichen ist, was sowohl den Vorgang der Verbindung selbst, als auch die notwendige Überprüfung von Verbindungsnähten oder -stellen im Betrieb einfach und damit kostengünstiger macht.

In einer bevorzugten Ausführungsform weist der Querschnitt der Seilscheibenspeichen dabei eine S-, Z- oder W-förmige Wellenform auf, da bei diesen die Erreichbarkeit der Schnittstellen besonders einfach ist, und gleichzeitig ein hohes Flächenträgheitsmoment erreicht wird.

Weiterhin bevorzugt sind die Seilscheibenspeichen jeweils aus einem trapezoiden Flachmaterial geformt, dass in die entsprechende Wellenform gebracht wird und dessen breite Basis an der Nabe angeordnet ist. Diese bevorzugte Ausführungsform bietet den Vorteil, dass Biegekräfte, die auf die Speichen wirken könne, einfacher und effektiver auf die Nabe der Seilscheibe übertragen werden können.

In diesem Zusammenhang kann auch vorgesehen sein, dass die jeweilige Seilscheibenspeiche an zumindest einer seiner mit Nabe oder Seilscheibenkranz verbundenen Enden eine im Wesentlichen mittige, die Anschlussfläche zur Nabe und/oder Seilscheibenkranz reduzierende, Ausnehmung aufweist. Diese Maßnahme erleichtert einerseits noch einmal die Montierbarkeit bzw. Verbindbarkeit der jeweiligen Speiche mit Nabe oder Kranz, da sich die Schnittstellenlänge erneut reduziert. Sie verringert aber gleichzeitig auch das absolute Gewicht an dieser Stelle, was in jedem Falle von Vorteil ist, da weniger Masse beschleunigt und abgebremst werden muss.

Schließlich ist bevorzugt, dass das Flachmaterial der Speichen ein Blech geeigneter Stärke ist, welches aufgrund der Wellenform und der damit erzielten guten Erreichbarkeit einfach mit Nabe und Scheibenkranz zu verschweißen ist, wobei auch dabei die durchgehend gleichmäßige Dicke des Bleches einen erheblichen Qualitätsvorteil der erzielbaren stoffschlüssigen Verbindung bedingt.

Weitere Vorteile und Eigenschaften der Erfindung ergeben sich aus der folgenden, rein illustrativen und in keiner Weise beschränkenden Beschreibung einer bevorzugten Ausführungsform der Erfindung, unter Bezugnahme auf die beigefügten Figuren; darin zeigt:
Fig. 1 die Seitenansicht der bevorzugten Ausführungsform einer Seilscheibe;
Fig. 2 die Querschnittsansicht einer Speiche gemäß Schnitt D-D in Fig. 1;
Fig. 3 die Querschnittsansicht einer Speiche gemäß Schnitt E-E in Fig. 1;
Fig. 4 die Draufsicht auf die Schnittstelle der Halbscheiben der Seilscheibe gemäß Schnitt A-A in Fig. 1;
Fig. 5 die Querschnittsansicht durch zwei Speichen der Seilscheibe gemäß Schnitt C-C in Fig. 1;
Fig. 6 die perspektivische Ansicht einer Speiche der Seilscheibe nach Fig. 1;
Fig. 7 die Vorderansicht einer Speiche der Seilscheibe nach Fig. 1;
Fig. 8 die Seitenansicht einer Speiche der Seilscheibe nach Fig. 1; und
Fig. 9 die Draufsicht auf eine Speiche der Seilscheibe nach Fig. 1.

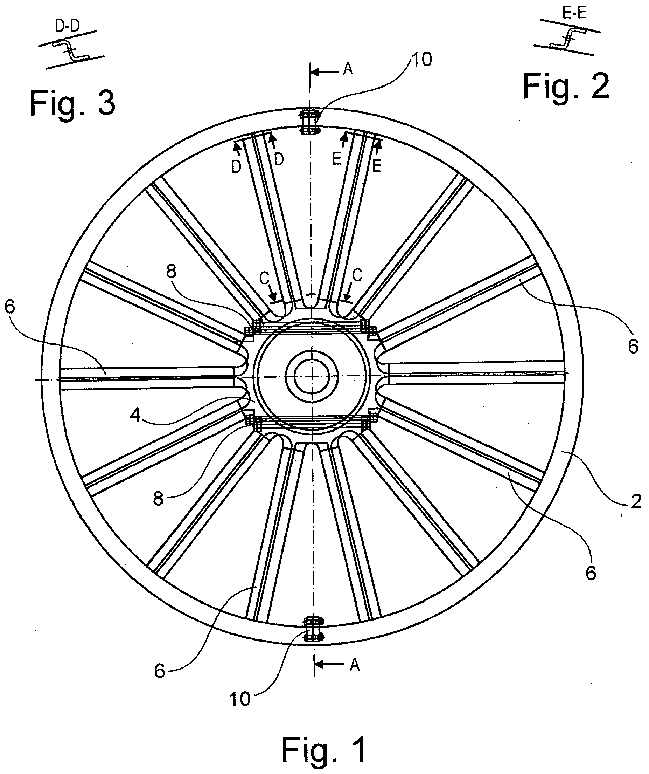

Die Fig. 1 zeigt die Seitenansicht einer Seilscheibe zur Verwendung als Führungseinrichtung zwischen einem Fördermittel und einem Seilträger, mit einem Seilscheibenkranz 2, einer Nabe 4 und einer Mehrzahl von diese verbindenden Seilscheibenspeichen 6.

Wie der Fig. 1 ohne weiteres zu entnehmen ist, besteht die Seilscheibe dabei aus zwei entlang der Linie A-A getrennten Halbscheiben, die mittels Schraubbolzen 8 an der Nabe 4 sowie mittels Verbindungsflaschen 10 am Seilscheibenkranz 2 lösbar verbunden sind.

Die Fig. 2 und 3 zeigen Querschnitte der Speichen 6 der Seilscheibe nach Fig. 1. Wie sich aus diesen Figuren ergibt, bestehen die Seilscheibenspeichen 6 jeweils aus einem einzigen, über den Querschnitt der Seilscheibenspeiche S bzw. Z förmig gebogenen Blech gleichmäßiger Dicke, die eine gute Erreichbarkeit der Schnittstellen z.B. für Schweißarbeiten garantiert, wie auch ein hohes Flächenträgheitsmoment.

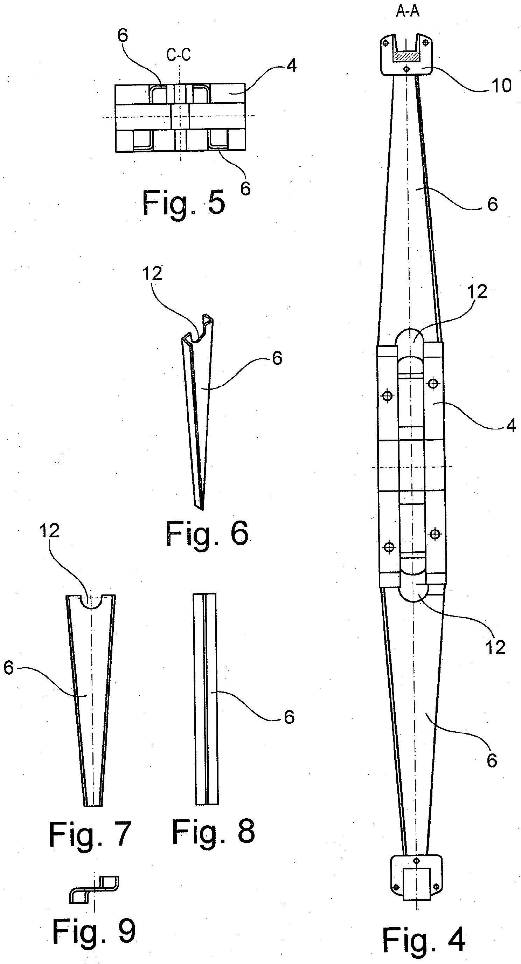

Der Fig. 4 ist dabei die Draufsicht auf die Schnittstelle der Halbscheiben der Seilscheibe gemäß Schnitt A-A in Fig. 1 zu entnehmen. Zu erkennen sind dabei vor allen Dingen die Verbindungsflasche 10 sowie die Schnittflächen der Nabe 4.

Die Fig. 5 zeigt eine Querschnittsansicht durch zwei Speichen 6 der Seilscheibe gemäß Schnitt C-C in Fig. 1. Gut zu erkennen ist dabei die durch die Ausnehmung 12 gebildeten, mit der Nabe 4 verbundenen Schnittstellen der Seilscheibenspeichen 6.

Wie den Figuren 2, 3 und 5 in Kombination entnehmbar ist, sind die Speichen in der dargestellten Ausführungsform quer über die gesamte Breite der Nabe 4 sowie des Seilscheibenkranzes 2 angeordnet. Die unterschiedliche Breite von Nabe 4 und Seilscheibenkranz 2 wir dabei durch die trapezoide Ausbildung der Speiche 6 über die Breite ermöglicht.

Die Fig. 6, 7 und 8 schließlich zeigen eine freigestellte perspektivische Ansicht, sowie eine Draufsicht und eine Seitenansicht einer Seilscheibenspeiche 6 der Seilscheibe nach Fig. 1.

## Patentansprüche

1. Seilscheibe zur Verwendung als Führungseinrichtung zwischen einem Fördermittel und einem Seilträger, mit einem Seilscheibenkranz (2), einer Nabe (4) und diese verbindenden Seilscheibenspeichen (6), **dadurch gekennzeichnet, dass** die Seilscheibenspeichen (6) jeweils aus einem einzigen, über den Querschnitt der Seilscheibenspeiche (6) mehrfach gebogenen, trapezoiden Flachmaterial geformt sind, dessen breite Basis an der Nabe (4) angeordnet ist.

2. Seilscheibe nach Anspruch 1, **dadurch gekennzeichnet, dass** der Querschnitt der Seilscheibenspeichen (6) eine S-förmige Wellenform aufweisen.

3. Seilscheibe nach Anspruch 1, **dadurch gekennzeichnet, dass** der Querschnitt der Seilscheibenspeichen (6) eine Z-förmige Wellenform aufweisen.

4. Seilscheibe nach Anspruch 1, **dadurch gekennzeichnet, dass** der Querschnitt der Seilscheibenspeichen (6) eine W-förmige Wellenform aufweisen.

5. Seilscheibe einem der vorhergehenden Ansprüche, dadurch gekenntzeichnet, dass die Seilscheibenspeichen (6) an zumindest einer seiner mit Nabe (4) oder Seilscheibenkranz (2) erbundenen Enden eine im Wesentlichen mittige, die Anschlussfläche zur Nabe (4) und/oder Seilscheibe reduzierende, Ausnehmung aufweist.

6. Seilscheibe nach einem der vorhergehenden Ansprüche, **dadurch gekennzeichnet, dass** das Flachmaterial ein Blech geeigneter Stärke ist.

## Claims

1. Sheave to be used as guide arrangement between a conveyor means and a rope carrier, with a sheave rim (2), a hub (4) and sheave spokes (6) connecting the hub and the sheave rim (2), **characterized in that** each sheave spoke (6) is formed of a single flat trapezoidal member with a multi-curved cross section whose broad base is attached to the hub (4).

2. Sheave according to Claim 1, **characterized in that** the cross section of the sheave spokes (6) has an S-shaped undulation.

3. Sheave according to Claim 1, **characterized in that** the cross section of the sheave spokes (6) has a Z-shaped undulation.

4. Sheave according to Claim 1, **characterized in that** the cross section of the sheave spokes (6) has a W-shaped undulation.

5. Sheave according to one of the preceding claims, **characterized in that** each sheave spoke (6) on at least one end connecting it to the hub (4) or the sheave rim (2) has an essentially centred recess which reduces the surface of the joint with the hub (4) and/or the sheave rim.

6. Sheave according to one of the preceding claims, **characterized in that** the flat stock member consists of a steel plate of suitable thickness.

## Revendications

1. Poulie pour une utilisation en tant qu'arrangement de guidage entre un convoyeur et un porte-câble, ayant une couronne de poulie (2), un moyeu (4) et des rayons de poulie (6) reliant le moyeu et la couronne de poulie, **caractérisée en ce que** chaque rayon de poulie (6) est formé d'une seule matière plane trapézoïdale pliée plusieurs fois sur la section transverse du rayon de poulie et dont la base large est attachée au moyeu (4).

2. Poulie selon la revendication 1, **caractérisée en ce que** la section transverse des rayons de poulie (6) comprend une ondulation en forme de S.

3. Poulie selon la revendication 1, **caractérisée en ce que** la section transverse des rayons de poulie (6) comprend une ondulation en forme de Z.

4. Poulie selon la revendication 1, **caractérisée en ce que** la section transverse des rayons de poulie (6) comprend une ondulation en forme de W.

5. Poulie selon une des revendications précédentes, **caractérisée en ce que** les rayons de poulie comprennent un évidement essentiellement centré, au niveau d'au moins une de ses extrémités connectée au moyeu (4) ou à la couronne de poulie (2) diminuant la face d'appui par rapport le moyeu (4) ou/et la couronne de poulie.

6. Poulie selon une des revendications précédentes, **caractérisée en ce que** la matière plane est une tôle d'épaisseur ou de résistance adaptée.
